# EUROPÄISCHE PATENTSCHRIFT

(11) **EP 2 557 059 B1**
(45) Veröffentlichungstag und Bekanntmachung des Hinweises auf die Patenterteilung: **16.04.2014**
(21) Anmeldenummer: 12176324.7
(22) Anmeldetag: 13.07.2012
(51) Int. Cl.: B65G 47/53

(54) **Fördereinrichtung umfassend eine Hub-Quereinheit mit Förderrollen**
Convoyeur comprenant une unité transversale de levage avec rouleaux de transport
Transport device comprising a transverse lifting unit with transport rollers

(30) Priorität: 09.08.2011 DE 102011109837
(43) Veröffentlichungstag der Anmeldung: 13.02.2013
(73) Patentinhaber: ROBERT BOSCH GMBH, 70442 Stuttgart (DE)
(72) Erfinder: Willi, Marco, 71726 Benningen Am Neckar (DE); Porzer, Volker, 213161 Wujin (CN); Ludwig, Peter, 72072 Tuebingen (DE); Buttau, Hans-Peter, 74348 Lauffen (DE)
(74) Vertreter: Maiß, Harald

(56) Entgegenhaltungen:
- DE-A1- 3 203 819
- DE-A1-102008 037 106
- US-A- 5 205 394
- US-A1- 2002 108 839
- US-A1- 2008 169 170

## Beschreibung

Die Erfindung betrifft eine Fördereinrichtung gemäß dem Oberbegriff von Anspruch 1.

Aus dem Katalog "TS 2pv" (Ausgabe 2.0; Stand 04/2011; Best.-Nr. 3 842 540 431) der Bosch Rexroth AG sind Fördereinrichtung für die Herstellung von Solarmodulen im Dünnschichtverfahren bekannt. Die Aufgabe derartiger Fördereinrichtung besteht im Wesentlichen darin, großflächige Glasplatten innerhalb einer Fertigungsanlage für Solarmodule zu transportieren. Die Fördereinrichtung umfasst mehrere Förderbänder, deren Aufbau Gegenstand der DE 20 2008 011 613 U1 ist. Die Glasplatten werden wegen ihrer großen Breite meist von drei oder mehr parallelen, endlos umlaufenden Förderbändern getragen, wobei jedes Förderband für sich nur eine geringe Breite von beispielsweise 40 mm aufweist. Auf der Seite 3-5 des angesprochenen Kataloges ist die Hub-Quereinheit LTS/NT dargestellt. Diese verbindet eine erste Förderstrecke mit einer zweiten Förderstrecke, die rechtwinklig von der ersten Förderstrecke abzweigt. Kernstück dieser Umsetzeinrichtung ist ein rechteckiger Hubrahmen, der im Kreuzungsbereich zwischen den beiden Förderstrecken angeordnet ist, wobei er sich im Wesentlichen über die gesamte Breite der ersten und der zweiten Förderstrecke erstreckt. Der Hubrahmen ist senkrecht zu der durch die Förderbänder definierten Förderebene beweglich. Hierfür ist in den vier Eckbereichen des Hubrahmens jeweils eine gesonderte pneumatische Hubeinrichtung angeordnet.

Auf dem Hubrahmen sind als Fördermittel mehrere parallele Förderbänder befestigt, die im Wesentlichen identisch zu den Förderbändern der ersten und der zweiten Förderstrecke ausgebildet sind, wobei sie sich nur über die Breite einer der beiden Förderstrecken erstrecken. Der Nachteil dieses Aufbaus besteht darin, dass er wegen der vielen gesonderten Förderbänder teuer ist. Weiter muss die erste Förderstrecke im Kreuzungsbereich unterbrochen werden, damit dort die Umsetzeinrichtung angeordnet werden kann. Darüber hinaus müssen die angetriebenen mittleren Förderbänder der ersten Förderstrecke im Kreuzungsbereich durch passive Fördermittel wie Rollenbahnen ersetzt werden.

Aus der US 5 025 394 ist eine Fördereinrichtung mit einer ersten und einer zweiten Förderstrecke nach dem Oberbegriff des Anspruchs 1 bekannt, welche Förderbänder aufweisen. Im Kreuzungsbereich zwischen der ersten und der zweiten Förderstrecke ist eine Umsetzeinrichtung vorhanden, mit der Fördergut von der ersten auf die zweite Förderstrecke umgesetzt werden kann. Es sind sehr viele Förderbänder vorgesehen, die sich unter der Last großer Glasplatten stark verbiegen würden. Die Umsetzeirichtung lässt sich nur schlecht an unterschiedlich große Glasplatten anpassen.

Aus der DE 32 03 819 A1 ist ein Sortiermodul mit einer Vielzahl von parallelen Förderbändern bekannt. An jedem Sortierausgang ist eine Umsetzeinrichtung vorhanden, welche mehrere Förderrollen aufweist, die zwischen den Förderbändern und parallel zu diesen angeordnet sind. Die Förderrollen werden von einem Elektromotor angetrieben, welcher in der Umsetzeinrichtung angeordnet ist. Zwischen zwei benachbarten Förderbändern ist jeweils eine einzige Förderrolle vorgesehen. Die vielen Förderbänder sind wiederum zur Auflagerung großer schwerer Glasplatten ungeeignet. Weiter lässt sich die Umsetzeinrichtung schlecht an unterschiedlich große Glasplatten anpassen.

Aus der DE 10 2008 037 106 A1 ist eine Förderrolle bekannt, welche mit einem Aufsteckring aus einem weichen Gummimaterial versehen ist.

Aus der US 2002/0108839 A1 und der US 2008/0169170 A1 sind weitere Fördereinrichtungen mit einer ersten und einer zweiten Förderstrecke bekannt, die im Kreuzungsbereich eine Umsetzeinrichtung mit Förderrollen aufweisen, welche parallel zu den Förderbändern der ersten Förderstrecke angeordnet sind.

Die Aufgabe der Erfindung besteht darin, die vorstehend genannten Nachteile zu überwinden.

Gemäß dem selbständigen Anspruch wird diese Aufgabe dadurch gelöst, dass alle Förderbänder der ersten Förderstrecke den Hubrahmen ununterbrochen überqueren, wobei die Fördermittel wenigstens zwei Förderrollen umfassen, die zwischen den Förderbändern der ersten Förderstrecke und parallel zu diesen angeordnet sind. Die Förderrollen sind wesentlich einfacher aufgebaut als die bekannten Förderbänder. Sie können darüber hinaus zwischen den Förderbändern und parallel zu diesen angeordnet werden, wobei sie die Glasplatten quer zu den genannten Förderbändern bewegen können. Hierbei ist es nicht notwendig, die erste Förderstrecke zu unterbrechen. Die Förderrollen erstrecken sich vorzugsweise über die gesamte Breite der zweiten Förderstrecke, damit sie das Fördergut, beispielsweise rechteckige Glasplatten, über die gesamte Breite abstützen können.

Die Förderrollen werden mit mehreren gesonderten Zugmitteln, vorzugsweise Riemen, von einem einzigen Elektromotor angetrieben. Der Antrieb der Förderrollen der Umsetzeinrichtung ist damit besonders kostengünstig. Durch die Verwendung mehrerer gesonderter Zugmittel können mit wenigen standardisierten Längen der Zugmittel viele unterschiedliche Fördereinrichtungen für unterschiedlich große Glasplatten aufgebaut werden. Darüber hinaus vereinfacht sich die Montage gegenüber einem einzigen langen Zugmittel, welches oft umgelenkt wird. Bei den Zugmitteln handelt es sich vorzugsweise um Riemen, höchst vorzugsweise um mehrrillige Keilriemen oder Zahnriemen.

Zwei benachbarte Förderrollen, die zwischen zwei benachbarten Förderbändern angeordnet sind, stehen über ein erstes Zugmittel in Drehantriebsverbindung. Der Verlauf des ersten Zugmittels wird durch die benachbarten Förderbänder der ersten Förderstrecke nicht gestört, so dass diese wie vorgeschlagen auf dem kürzesten Wege mit dem ersten Zugmittel miteinander in Drehantriebsverbindung gebracht werden können.

Der Hubrahmen ist rechteckig ausgebildet, wobei in jedem Eckbereich jeweils ein gesonderter Hubantrieb angeordnet ist, wobei die Hubantriebe vorzugsweise Pneumatikzylinder umfassen. Durch die gesonderten Hubantriebe ist sichergestellt, dass auch ein sehr großer Hubrahmen überall um den gleichen Betrag angehoben oder abgesenkt wird, so dass die durch die Fördermittel auf dem Hubrahmen definierte Förderebene immer parallel zur Förderebene der ersten und der zweiten Förderstrecke ist. Der bevorzugte Hubantrieb mittels eines Pneumatikzylinders ist besonders kostengünstig.

In den abhängigen Ansprüchen sind vorteilhafte Weiterbildungen und Verbesserungen der Erfindung angegeben.

Jede Förderrolle kann an gesonderten Drehlagern drehbar gelagert sein, wobei die Drehlager verschiebbar an dem Hubrahmen befestigt sind. Damit kann die serienmäßig hergestellte Einheit aus einer Förderrolle mit den zugeordneten Drehlagern in Umsetzeinrichtungen mit unterschiedlicher Breite und unterschiedlicher Anzahl an Förderbändern der ersten Förderstrecke verwendet werden. Die Lage der Förderrollen kann aufgrund deren Verschiebbarkeit flexibel an die Größe der zu fördernden Glasplatten angepasst werden.

Die Förderrollen können an ihrer Umfangsfläche mit mehreren O-Ringen versehen sein, welche in Mitnahmeeingriff mit dem Fördergut bringbar sind. Der Grundkörper der Förderrollen ist vergleichsweise steif, wobei die Lage der Förderrollen nie ganz genau parallel zur Förderebene eingestellt werden kann. Eine kreiszylindrische Förderolle ohne die vorgeschlagenen O-Ringe würde daher das Fördergut in Form der Glasplatte oft nicht über die ganze Breite abstützen. Durch die Elastizität der O-Ringe werden die genannten Montagetoleranzen ausgeglichen, so dass die Glasplatten über die gesamte Breit abgestützt sind. Dass an den O-Ringen nur jeweils eine im Wesentlichen punktförmige Abstützung gegeben ist, stört nicht, es führt vielmehr zu einer erwünschten hohen Nachgiebigkeit der O-Ringe. Weiter besitzen die O-Ringe aus Gummi einen guten Reibeingriff mit den glatten Oberflächen der Glasplatten, so dass die erforderlichen Antriebskräfte problemlos reibschlüssig übertragen werden können. Die O-Ringe bestehen vorzugsweise aus einem auf Fluor basierenden Elastomer, damit sie temperaturbeständig sind um heiße Glasplatten transportieren zu können. Derartige Elastomere sind unter dem Handelsnamen "Viton" erhältlich.

Es kann wenigstens eine Zwischenwelle vorgesehen sein, welche drehbar am Hubrahmen befestigt ist, wobei deren Drehachse parallel zu den Förderrollen verläuft, wobei die Zwischenwelle in jeder Stellung des Hubrahmens unterhalb der Förderbänder der ersten Förderstrecke angeordnet ist, wobei ein zweites Zugmittel eine Drehantriebsverbindung zwischen der Zwischenwelle und einer Förderrolle herstellt, wobei die Zwischenwelle mit dem Elektromotor in Drehantriebsverbindung steht. Der zweite Zahnriemen verläuft folglich im Wesentlichen senkrecht zur Förderebene, so dass sein Verlauf durch Förderbänder der ersten Förderstrecke nicht gestört wird. Über die Zwischenwellen kann die Antriebskraft des Elektromotors problemlos auf die Förderrollen verteilt werden, welche durch ein Förderband der ersten Förderstrecke getrennt sind.

Zwei benachbarte Zwischenwellen können über ein drittes Zugmittel in Drehantriebsverbindung stehen. Da sich die Zwischenwellen immer unterhalb der Förderbänder der ersten Förderstrecke befinden, stören die genannten Förderbänder den Verlauf des dritten Zugmittels nicht. Die Zwischenwellen können daher auf dem kürzesten Wege über das dritten Zugmittel miteinander in Drehantriebsverbindung gebracht werden.

Der Elektromotor kann an dem Hubrahmen befestigt sein, wobei der Elektromotor in Form eines Getriebemotors ausgebildet ist, dessen Antriebswelle fest mit einer Zwischenwelle verbunden ist. Eine der Zwischenwellen kann problemlos direkt mit dem Elektromotor gekoppelt werden, ohne dass ein gesondertes Zugmittel erforderlich ist. Der Elektromotor kann dabei ohne weiters so an dem Hubrahmen befestigt werden, dass er dessen Hubbewegung nicht stört. Dieses Ausführungsform ist daher besonders kostengünstig.

Die Hubantriebe können über gesonderte, langgestreckte Hubträger verbunden sein, um den Hubrahmen zu bilden, wobei die Hubträger eine konstante Querschnittsform mit einem Zahnstangenabschnitt aufweisen, wobei zwei benachbarte Hubantriebe eine Ritzelwelle drehbar lagern, die über ihrer gesamte Länge verteilt wenigstens abschnittsweise mit einer Außenverzahnung versehen ist, welche in den Zahnstangenabschnitt eingreift. Hierdurch soll erreicht werden, dass sich alle vier Hubantriebe synchron bewegen, so dass die durch die Förderrollen definierte Förderebene immer parallel zur Förderebene der ersten und der zweiten Förderstrecke ist. Die vorgeschlagene Ausführungsform ist besonders vorteilhaft, wenn pneumatische Hubantriebe zum Einsatz kommen, da deren Verfahrgeschwindigkeit nur sehr ungenau eingestellt werden kann. Durch die vorgeschlagene Lösung wird den Pneumatikzylindern eine synchrone Bewegung aufgezwungen.

Die Erfindung wird im Folgenden anhand der beigefügten Zeichnungen näher erläutert. Es stellt dar:
- Fig. 1: eine perspektivische Ansicht einer erfindungsgemäßen Fördereinrichtung;
- Fig. 2: eine Explosionsansicht der Umsetzeinrichtung;
- Fig. 3: eine Schnittansicht der Umsetzeinrichtung, wobei die Schnittebene senkrecht zu den Förderrollen verläuft, so dass das die ersten und die zweiten Zugmittel sichtbar sind;
- Fig. 4: eine Schnittansicht der Umsetzeinrichtung, wobei die Schnittebene senkrecht zu den Förderrollen verläuft, so dass die dritten Zugmittel sichtbar sind; und
- Fig. 5: eine Teilschnittansicht der Umsetzeinrichtung, wobei die Schnittebene senkrecht zur Förderebene durch die erste Zwischenwelle verläuft.

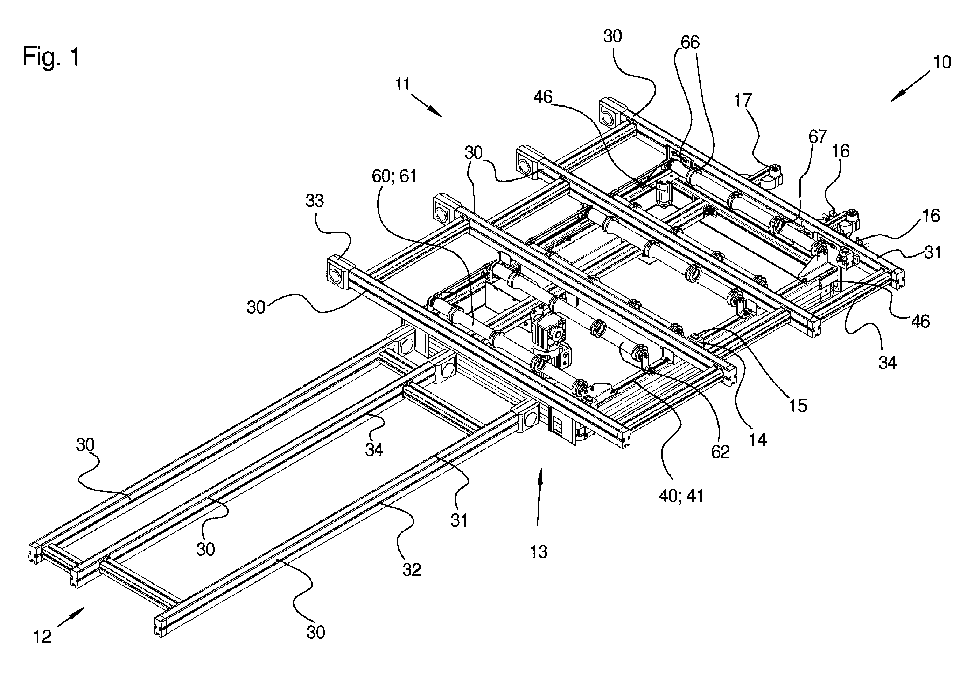

Fig. 1 zeigt eine perspektivische Ansicht einer erfindungsgemäßen Fördereinrichtung 10. Die Fördereinrichtung 10 umfasst eine erste Förderstrecke 11 und eine zweite Förderstrecke 12, die rechtwinklig von der ersten Förderstrecke 11 abzweigt. Die erste Förderstrecke 11 umfasst vier parallele Förderbänder 31, wohingegen die zweite Förderstrecke 12 drei parallele Förderbänder 31 umfasst. Die Förderbänder 31 sind jeweils in Form eines Fördermoduls 30 ausgebildet, das gemäß der DE 20 2008 011 613 U1 ausgebildet ist. Der gesamte Inhalt der DE 20 2008 011 613 U1 wird in Bezug genommen und zum Inhalt der vorliegenden Anmeldung gemacht.

Sämtliche Fördermodule 30 sind im Wesentlichen identisch ausgebildet, wobei sich die Fördermodule 30 der ersten und der zweiten Förderstrecke 11; 12 nur hinsichtlich ihrer Länge unterscheiden. Jedes Fördermodul 30 umfasst ein Tragprofil 32, welches aus Aluminium im Strangpressverfahren hergestellt ist. Das endlose Förderband 31 ist außen um das Tragprofil 32 herum geführt, wobei es oben auf einer ebenen Auflagefläche aufliegt, während es unten in einer abgedeckten Ausnehmung des Tragprofils 32 aufgenommen ist. An den Enden des Tragprofils ist jeweils ein Endkopf 33 mit einer drehbaren Umlenkrolle für das Förderband 31 vorgesehen. Die Umlenkrolle kann wahlweise von einem Elektromotor angetrieben sein oder nicht. Die parallelen Fördermodule 30 einer Transportstrecke 11; 12 sind über Verbindungsprofile 34 fest miteinander verbunden, so dass sämtliche Förderbänder 31 eine gemeinsame Förderebene definieren.

Im Kreuzungsbereich 13 zwischen der ersten und der zweiten Förderstrecke 11; 12 ist eine Umsetzeinrichtung 40 angeordnet, mit der (nicht dargestelltes) Fördergut, insbesondere Glasplatten, von der ersten auf die zweite Förderstrecke 11; 12 umgleitet werden können und umgekehrt. Die Umsetzeinrichtung 40 ist hierfür mit insgesamt sechs parallelen Förderrollen 60 ausgestattet, die von einem Hubrahmen 41 angehoben und abgesenkt werden können. Wenn eine rechtechteckige Glasplatte entlang der ersten Forderstrecke 11 beweget wird, befinden sich die Förderrollen 60 unterhalb der Förderebene. Sobald die Näherungsschalter 16 an der ersten Förderstrecke erkennen, dass sich die Glasplatte im Kreuzungsbereich 13 befinden, wir die ersten Förderstrecke 11 still gesetzt. Die korrekte Lage der Glasplatte kann zusätzlich mit mehreren Vereinzelern 14 sichergestellt werden. Diese weisen ein bewegliches Sperrelement 15 auf, welches wahlweise in den Weg der Glasplatten bewegt werden kann oder nicht. Im ersten Fall bilden die Vereinzeler 14 einen Anschlag für die Glasplatte. Sobald die Glasplatte im Kreuzungsbereich 13 still steht wird der Hubrahmen 41 mit vier Hubantrieben 46 angehoben, so dass die Förderrollen 60 in Mitnahmeeingriff mit der Glasplatte gelangen. Wenn die Förderrollen 60 in Drehbewegung versetzt werden, wird die Glasplatte quer zur ersten Förderstrecke 11 auf die zweite Förderstrecke bewegt 12. Die Förderbänder 31 der zweiten Förderstrecke 12 sind dabei in Bewegung, so dass sie den Weitertransport der Glasplatte übernehmen können. Sobald die Glasplatte außer Eingriff mit den Förderrollen 60 ist wird der Hubrahmen 41 mit den Förderrollen 60 wieder abgesenkt. Der gesamte Vorgang kann auch in umgekehrter Richtung stattfinden, so dass die Glassplatte von der zweiten Förderstrecke 12 auf die erste Förderstrecke 11 überführt wird. Dabei dienen drehbare Rollen 17 als Anschlag für die Bewegung der Glasplatten.

Die Förderrollen 60 sind an ihrer Umfangsfläche mit O-Ringen 66 aus Gummi versehen, auf denen die Glasplatte aufliegt. Dabei sind jeweils zwei O-Ringe 66 auf einem Klemmring 67 montiert, der aus zwei identischen Halbschalen zusammengesetzt ist. Der Klemmring 67 kann an jede beliebig Stelle des kreiszylindrischen Grundkörpers 62 der Förderrolle 60 bewegt und dort mit diesem verklemmt werden.

In Fig. 1 ist weiter zu erkennen, dass die Förderbänder 31 der ersten Förderstrecke 11 den Hubrahmen 41 überqueren, so dass die Fördermodule 30 im Kreuzungsbereich 13 nicht unterbrochen sind. Weiter ist zu erkennen, dass zwischen zwei benachbarten Förderbändern 31 bzw. Fördermodulen 30 der ersten Förderstrecke 11 jeweils zwei Förderrollen 60 angeordnet sind. Daneben ist zu erkennen, dass sich der rechteckige Hubrahmen 41 im Wesentlichen über die gesamte Breite der ersten und der zweite Förderstrecke 11; 12 erstreckt. Hinsicht der zweiten Förderstrecke ist seine Breite sogar etwas größer ausgeführt. Für die Abmessungen des Hubrahmens ist entscheidend, dass die Förderrollen 60 die Glasplatten im Wesentlichen über ihre gesamte Auflagefläche abstützten, wobei mehrere Abstützpunkte verteilt über die Auflagefläche ausreichend sind.

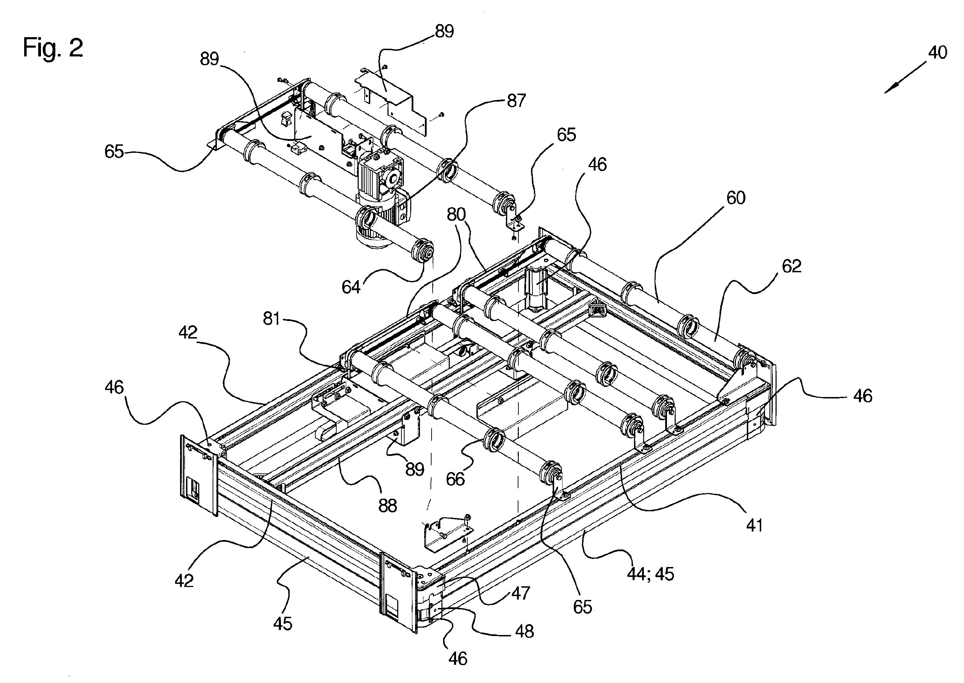

Fig. 2 zeigt eine Explosionsansicht der Umsetzeinrichtung 40. Die Umsetzeinrichtung 40 umfasst einen Hub- und einem Festrahmen 41; 44, die jeweils die gleichen Außenabmessungen aufweisen, wobei sie in der tiefsten Stellung der Umsetzeinheit 40 unmittelbar aufeinander liegen. Der Hub- und der Festrahmen 41; 44 werden jeweils von vier geraden, langgestreckten Hub- bzw. Festträgern 42; 45 gebildet, die aus Aluminium im Strangpressverfahren hergestellt sind. In den Eckebreichen des rechteckigen Hubrahmens 41 ist jeweils ein Hubantrieb 46 angeordnet, wobei alle Hubantriebe 46 identisch ausgeführt. Jeder Hubantrieb 46 umfasst ein Hub- und ein Festteil 47; 48. Das Hubteil 47 verbindet die vier Hubträger 42 des Hubrahmens 41 zu einem Rechteck, während das Festteil 48 die vier Festträger 45 des Festrahmens 44 zu einem Rechteck verbindet. Das Hub- und das Festteil 47; 48 sind über eine pneumatische Hubvorrichtung miteinander verbunden. Das Festteil 48 bildet den Zylinderraum eines Pneumatikzylinders aus dem eine Kolbenstange herausragt, die mit dem Hubteil 47 fest verbunden ist. Zwischen dem Hub- und dem Festteil 47; 48 sind außerdem Gleitführungen vorgesehen, damit sich der Hub- und der Festrahmen 41; 44 ausschließlich senkrecht zur Förderebene relativ zueinander bewegen können.

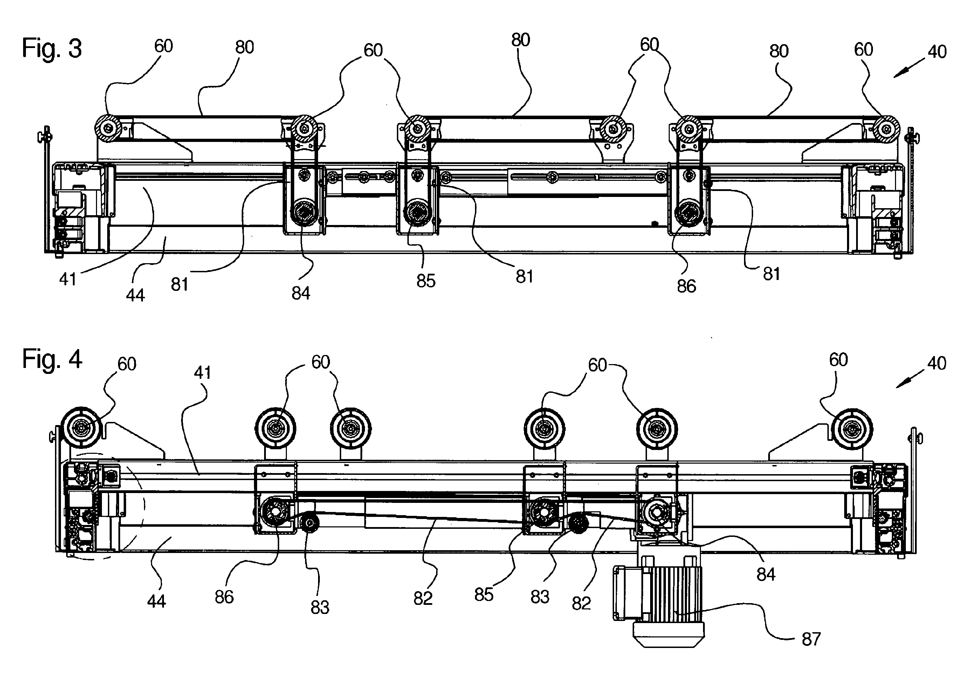

Die Förderrollen 60 sind an ihren beiden Enden jeweils über ein L-förmiges Halteteil 65 mit dem Hubrahmen verbunden, wobei das Halteteil 65 an jeder beliebigen Stelle mit dem zugeordneten Hubträger 42 verschraubt werden kann. Die Haltteile 65 tragen ein Drehlager 64, welches vorzugsweise in Form eines Wälzlagers ausgeführt ist. Der Grundkörper 62 der Förderrolle 60 wird von dem Drehlager 64 drehbar gehalten. Jeweils zwei benachbarte Förderrollen 60 stehen über ein erstes Zugmittel 80, nämlich einen mehrrilligen Keilriemen, in Drehantriebsverbindung, wobei das erste Zugmittel 80 an einem Ende der Förderrolle 60 eingreift. Eine der beiden Förderrollen 60 steht über ein zweites Zugmittel 81 mit einer Zwischenwelle in Drehantriebsverbindung, was mit Bezug auf Fig. 3 und 4 noch näher erläutert wird. Das erste und das zweite Zugmittel 80; 81 greifen unmittelbar benachbart zueinander in die gemeinsame Förderrolle 60 ein.

Der Elektromotor 87 in Form eines Getriebemotors ist mit einem Zwischenträger 88 verschraubt, welcher wiederum mit zwei gegenüberliegenden Hubträgern 42 verschraubt ist. Der Zwischenträger 88 ist ebenfalls aus Aluminium im Strangpressverfahren hergestellt und erstreckt sich parallel zu den beiden anderen Hubträgern 42. Hinzweisen ist noch auf die verschiedenen Abdeckbleche 89, mit denen die meisten beweglichen Teile des Antriebs abgedeckt sind, so dass diese vor Umgebungseinflüssen geschützt sind.

Fig. 3 zeigt eine Schnittansicht der Umsetzeinrichtung 40, wobei die Schnittebene senkrecht zu den Förderrollen 60 verläuft, so dass das die ersten und die zweiten Zugmittel 80; 81 sichtbar sind. Die Schnittlage der Fig. 4 ist im Wesentlichen die gleiche wie die der Fig. 3 jedoch mit entgegen gesetzter Blickrichtung, so dass die dritten Zugmittel 82 sichtbar sind. Insgesamt sind drei Zwischenwellen 84; 85; 86 vorgesehen, die sich genau unterhalb einer zugeordneten Förderrolle 60 befinden. Die Zwischenwellen 84; 85; 86 sind drehbar gelagert, wobei deren Drehachse parallel zu den Förderrollen 60 verläuft. Jede Zwischenwelle 84; 85; 86 steht über ein zweites Zugmittel 81, nämlich einen mehrrilligen Keilriemen mit der zugeordneten Förderrolle 60 in Drehantriebsverbindung, wobei die genannte Förderrolle 60 über ein erstes Zugmittel 80 mit einer benachbarten Förderrolle 60 in Drehantriebsverbindung steht. Die erste Zwischenwelle 85 wird direkt von dem Elektromotor 87 in Form eines Getriebemotors angetrieben. Die Antriebswelle des Getriebemotors 87 ist über eine Kupplung drehfest mit der ersten Zwischenwelle 84 verbunden. Die erste Zwischenwelle 84 steht über ein drittes Zugmittel 82 in Drehantriebsverbindung mit der zweiten Zwischenwelle 85. Die zweite Zwischenwelle 85 steht mit einem weitern dritten Zugmittel 82 in Drehantriebsverbindung mit der dritten Zwischenwelle 86. Die dritten Zugmittel 82 sind in Form von Zahnriemen ausgeführt. Jedem dritten Zugmittel 82 ist eine drehbare, lageverstellbare Spannrolle 83 zugeordnet, mit der die Spannung des zugeordneten dritten Zugmittels 82 eingestellt werden kann. Die Spannung der ersten und der zweiten Zugmittel 80; 81 wird dagegen über den Abstand der Förderrollen 60 und der Zwischenwellen 84; 85; 86 eingestellt, deren Lage jeweils stufenlos verstellbar ist.

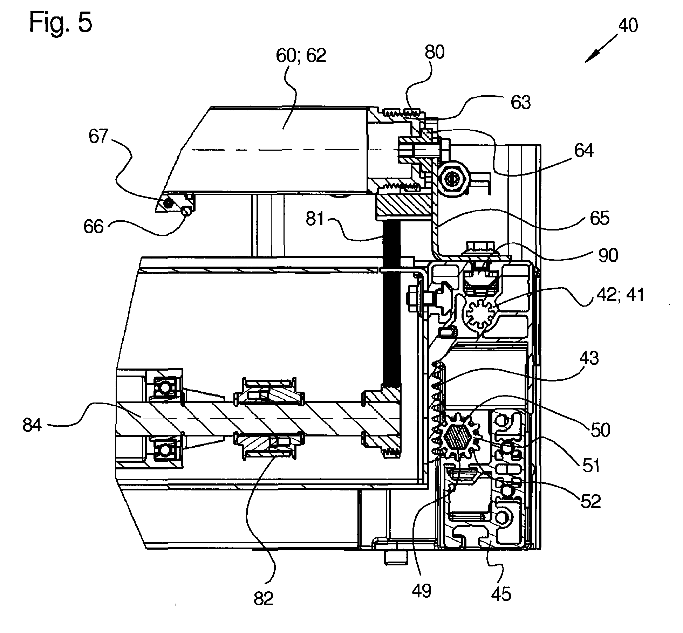

Fig. 5 zeigt eine Teilschnittansicht der Umsetzeinlichtung 40, wobei die Schnittebene senkrecht zur Förderebene durch die erste Zwischenwelle 84 verläuft. Zu erkennen ist die konstante Querschnittsform des Hubträgers 42, der mit einem Zahnstangenabschnitt 43 versehen ist, welcher sich senkrecht zur Förderebene erstreckt. Die Ritzelwelle 49 umfasst eine Sechskantewelle 50 welche drehbar in den Festteilen der Hubantriebe gelagert ist. Auf der Sechskantwelle 50 sind verteilt über die gesamte Länge mehrer Ritzel 51 angeordnet, wobei die Außenverzahnung 52 der Ritzel 51 in den Zahnstangenabschnitt 43 eingreift. Durch den formschlüssigen Eingriff der Ritzel 51 in die sechseckige Querschnittsform, der Sechskantwelle ist gewährleistet, dass sich alle Ritzel 51 synchron drehen. Hierdurch wird erreicht, dass sich der Hubträger 42 immer parallel zur Ritzelwelle 49 erstreckt, die wiederum parallel zur Förderebene der Fördereinrichtung eingebaut ist.

Das erste und das zweite Zugmittel 80; 81 greifen in ein gemeinsames Riemenrad 63 ein, welches einstückig am Grundkörper 62 der Förderrolle ausgebildet ist. Weiter ist in Fig. 5 das Drehlager 64 zu erkennen, welches vorzugsweise als Wälzlager ausgeführt ist, und welches an dem L-förmigen Halteteil 65 befestigt ist, wobei es den Grundkörper 62 der Förderrolle 60 trägt. Das Haltteil 65 ist wiederum über eine Hammerschraube 90 an dem Hubträger 42 befestigt, die dort in eine hinterschnittene T-förmige Nut eingreift.

Hinzuweisen ist noch auf die bereits angesprochenen O-Ringe 66 welche von einem Klemmring 67 getragen werden, der mit dem Grundkörper 62 der Förderrolle verklemmt ist. Weiter ist in Fig. 5 die konstante Querschnittsform des Festträgers 45 zu erkennen.

### Bezugszeichenliste

- 10: Fördereinrichtung
- 11: erste Förderstrecke
- 12: zweite Förderstrecke
- 13: Kreuzungsbereich
- 14: Vereinzeler
- 15: Sperrelement
- 16: Näherungsschalter
- 17: drehbare Rolle

- 30: Fördermodul
- 31: Förderband
- 32: Tragprofil
- 33: Endkopf
- 34: Verbindungsprofil

- 40: Umsetzeinrichtung
- 41: Hubrahmen
- 42: Hubträger
- 43: Zahnstangenabschnitt
- 44: Festrahmen
- 45: Festträger
- 46: Hubantrieb
- 47: Hubteil
- 48: Festteil
- 49: Ritzelwelle
- 50: Sechskantwelle
- 51: Ritzel
- 52: Außenverzahnung

- 60: Förderrolle
- 61: Umfangsfläche
- 62: Grundkörper
- 63: Riemenrad
- 64: Drehlager
- 65: Halteteil
- 66: O-Ring
- 67: Klemmring

- 80: erstes Zugmittel
- 81: zweits Zugmittel
- 82: drittes Zugmittel
- 83: Spannrolle
- 84: erste Zwischenwelle
- 85: zweite Zwischenwelle
- 86: dritte Zwischenwelle
- 87: Elektromotor
- 88: Zwischenträger
- 89: Abdeckblech
- 90: Hammerschraube

## Patentansprüche

1. Fördereinrichtung (10) mit einer ersten Förderstrecke (11) und einer rechtwinklig davon abzweigenden zweiten Förderstrecke (12), wobei die erste und die zweite Förderstrecke (11; 12) jeweils wenigstens drei parallele endlos umlaufenden Förderbänder (31) aufweisen, die eine Förderebene definieren, wobei in dem Kreuzungsbereich (13) zwischen der ersten und der zweiten Förderstrecke (11; 12) eine Umsetzeinrichtung (40) angeordnet ist, wobei die Umsetzeinrichtung (40) einen senkrecht zur Förderebene bewegbaren Hubrahmen (41) aufweist, der sich im Wesentlichen über die gesamte Breite der ersten und der zweiten Förderstrecke (11; 12) erstreckt, wobei auf dem Hubrahmen Fördermittel (60) angebracht sind, so dass Fördergut mit den Fördermitteln (60) von der ersten Förderstrecke (11) auf die zweite Förderstrecke (12) umgeleitet werden kann oder umgekehrt, wobei die Fördermittel wenigstens zwei Förderrollen (60) umfassen, die zwischen den Förderbändern (31) der ersten Förderstrecke (11) und parallel zu diesen angeordnet sind,
**dadurch gekennzeichnet, dass** der Hubrahmen (41) rechteckig ausgebildet ist, wobei in jedem Eckbereich jeweils ein gesonderter Hubantrieb (46) angeordnet ist, wobei alle Förderbänder (31) der ersten Förderstrecke (11) den Hubrahmen (41) ununterbrochen überqueren, wobei die Förderrollen (60) mit mehreren gesonderten Zugmitteln (80; 81; 82), vorzugsweise Riemen, von einem einzigen Elektromotor (87) angetrieben werden, wobei zwei benachbarte Förderrollen (60), die zwischen zwei benachbarten Förderbändern (31) angeordnet sind, über ein erstes Zugmittel (80) in Drehantriebsverbindung stehen.

2. Fördereinrichtung nach Anspruch 1,
**dadurch gekennzeichnet, dass** jede Förderrolle (60) an gesonderten Drehlagern (64) drehbar gelagert ist, wobei die Drehlager (64) verschiebbar an dem Hubrahmen (41) befestigt sind.

3. Fördereinrichtung nach einem der vorstehenden Ansprüche,
**dadurch gekennzeichnet, dass** die Förderrollen (60) an ihrer Umfangsfläche (61) mit mehreren O-Ringen (66) versehen sind, welche in Mitnahmeingriff mit dem Fördergut bringbar sind.

4. Fördereinrichtung nach einem der vorstehenden Ansprüche,
**dadurch gekennzeichnet, dass** wenigstens eine Zwischenwelle (84; 85; 86) vorgesehen ist, welche drehbar am Hubrahmen (41) befestigt ist, wobei deren Drehachse parallel zu den Förderrollen (60) verläuft, wobei die Zwischenwelle in jeder Stellung des Hubrahmens (41) unterhalb der Förderbänder (31) der ersten Förderstrecke (11) angeordnet ist, wobei ein zweites Zugmittel (81) eine Drehantriebsverbindung zwischen der Zwischenwelle (84; 85; 86) und einer Förderrolle (60) herstellt, wobei die Zwischenwelle (84; 85; 86) mit dem Elektromotor (87) in Drehantriebsverbindung steht.

5. Fördereinrichtung nach Anspruch 4,
**dadurch gekennzeichnet, dass** zwei benachbarte Zwischenwellen (84; 85; 86) über ein drittes Zugmittel (82) in Drehantriebsverbindung stehen.

6. Fördereinrichtung nach Anspruch 4 oder 5,
**dadurch gekennzeichnet, dass** der Elektromotor (87) an dem Hubrahmen befestigt ist, wobei der Elektromotor (87) in Form eines Getriebemotors ausgebildet ist, dessen Antriebswelle fest mit einer Zwischenwelle (84) verbunden ist.

7. Fördereinrichtung nach einem der vorstehenden Ansprüche,
**dadurch gekennzeichnet, dass** die Hubantriebe (46) Pneumatikzylinder umfassen.

8. Fördereinrichtung nach Anspruch 1 oder 7,
**dadurch gekennzeichnet, dass** die Hubantriebe (46) über gesonderte, langgestreckte Hubträger (42) verbunden sind, um den Hubrahmen (41) zu bilden, wobei die Hubträger (42) eine konstante Querschnittsform mit einem Zahnstangenabschnitt (43) aufweisen, wobei zwei benachbarte Hubantriebe (46) eine Ritzelwelle (49) drehbar lagern, die über ihrer gesamte Länge verteilt wenigstens abschnittsweise mit einer Außenverzahnung (52) versehen ist, welche in den Zahnstangenabschnitt (43) eingreift.

## Claims

1. Conveying device (10) having a first conveying path (11) and a second conveying path (12) branching off at a right angle therefrom, wherein the first and the second conveying path (11; 12) each have at least three parallel endlessly rotating conveying belts (31) which define a conveying plane, wherein a transfer device (40) is arranged in the intersection region (13) between the first and the second conveying path (11; 12) wherein the transfer device (40) has a lifting frame (41) which can be moved perpendicularly to the conveying plane and which extends substantially over the entire width of the first and the second conveying path (11; 12), wherein conveying means (60) are mounted on the lifting frame such that material being conveyed can be redirected by the conveying means (60) from the first conveying path (11) to the second conveying path (12), or vice versa, wherein the conveying means comprise at least two conveying rollers (60) which are arranged between and parallel to the conveyor belt (31) of the first conveying path (11), **characterized in that** the lifting frame (41) is of rectangular design, wherein a separate lifting drive (46) is in each case arranged in each corner region, wherein all the conveyor belts (31) of the first conveying path (11) cross the lifting frame (41) uninterrupted, wherein the conveying rollers (60) are driven using a plurality of separate traction means (80; 81; 82), preferably belts, by a single electric motor (87), wherein two adjacent conveying rollers (60) which are arranged between two adjacent conveyor belts (31) are in rotary driving connection by a first traction means (80).

2. Conveying device according to Claim 1, **characterized in that** each conveying roller (60) is rotatably mounted on separate pivot bearings (64), wherein the pivot bearings (64) are fastened displaceably on the lifting frame (41).

3. Conveying device according to one of the preceding claims, **characterized in that** the conveying rollers (60) are provided at their circumferential surface (61) with a plurality of O-rings (66) which can be brought into driving engagement with the material being conveyed.

4. Conveying device according to one of the preceding claims, **characterized in that** at least one intermediate shaft (84; 85; 86) is provided which is rotatably fastened on the lifting frame (41), wherein its axis of rotation extends parallel to the conveying rollers (60), wherein the intermediate shaft is arranged below the conveyor belt (31) of the first conveying path (11) in each position of the lifting frame (41), wherein a second traction means (81) produces a rotary driving connection between the intermediate shaft (84; 85; 86) and a conveying roller (60), wherein the intermediate shaft (84; 85; 86) is in rotary driving connection with the electric motor (87).

5. Conveying device according to Claim 4, **characterized in that** two adjacent intermediate shafts (84; 85; 86) are in rotary driving connection by a third traction means (82).

6. Conveying device according to Claim 4 or 5, **characterized in that** the electric motor (87) is fastened on the lifting frame, wherein the electric motor (87) is designed in the form of a gear motor whose drive shaft is fixedly connected to an intermediate shaft (84).

7. Conveying device according to one of the preceding claims, **characterized in that** the lifting drives (46) comprise pneumatic cylinders.

8. Conveying device according to Claim 1 or 7, **characterized in that** the lifting drives (46) are connected via separate, elongate lifting supports (42) in order to form the lifting frame (41), wherein the lifting supports (42) have a constant cross-sectional shape with a rack portion (43), wherein two adjacent lifting drives (46) rotatably mount a pinion shaft (49) which is provided at least in certain portions with an external toothing (52) distributed over its entire length, which toothing engages in the rack portion (43).

## Revendications

1. Convoyeur (10) comprenant une première section de transport (11) et une deuxième section de transport (12) partant à angle droit depuis celle-ci, la première et la deuxième section de transport (11 ; 12) présentant chacune au moins trois bandes transporteuses (31) parallèles entraînées en rotation sans fin, lesquelles définissent un plan de transport, un dispositif de transfert (40) étant disposé dans la région de l'intersection (13) entre la première et la deuxième section de transport (11 ; 12), le dispositif de transfert (40) présentant un cadre de levage (41) déplaçable perpendiculairement au plan de transport, lequel s'étend essentiellement sur toute la largeur de la première et de la deuxième section de transport (11 ; 12), des moyens de transport (60) étant montés sur le cadre de levage de telle sorte que le produit à transporter puisse être transféré avec les moyens de transport (60) de la première section de transport (11) à la deuxième section de transport (12) ou inversement, les moyens de transport comprenant au moins deux rouleaux de transport (60) qui sont disposés entre les bandes transporteuses (31) de la première section de transport (11) et parallèlement à celles-ci, **caractérisé en ce que** le cadre de levage (41) est réalisé sous forme rectangulaire, dans chaque région de coin étant disposé à chaque fois un entraînement de levage séparé (46), toutes les bandes transporteuses (31) de la première section de transport (11) passant transversalement au-dessus du cadre de levage (41) de manière ininterrompue, les rouleaux de transport (60) étant entraînés avec plusieurs moyens de traction séparés (80 ; 81 ; 82), de préférence des courroies, par un moteur électrique unique (87), deux rouleaux de transport adjacents (60) qui sont disposés entre deux bandes transporteuses adjacentes (31) étant en liaison d'entraînement en rotation par le biais d'un premier moyen de traction (80).

2. Convoyeur selon la revendication 1,
**caractérisé en ce que** chaque rouleau de transport (60) est supporté à rotation sur des paliers rotatifs séparés (64), les paliers rotatifs (64) étant fixés de manière déplaçable au niveau du cadre de levage (41).

3. Convoyeur selon l'une quelconque des revendications précédentes,
**caractérisé en ce que** les rouleaux de transport (60) sont munis au niveau de leur surface périphérique (61) de plusieurs joints toriques (66) qui peuvent être amenés en prise d'entraînement avec le produit à transporter.

4. Convoyeur selon l'une quelconque des revendications précédentes,
**caractérisé en ce qu'**au moins un arbre intermédiaire (84 ; 85 ; 86) est prévu, lequel est fixé de manière rotative au cadre de levage (41), son axe de rotation s'étendant parallèlement aux rouleaux de transport (60), l'arbre intermédiaire, dans chaque position du cadre de levage (41), étant disposé en dessous des bandes transporteuses (31) de la première section de transport (11), un deuxième moyen de traction (81) établissant une liaison d'entraînement en rotation entre l'arbre intermédiaire (84 ; 85 ; 86) et un rouleau de transport (60), l'arbre intermédiaire (84 ; 85 ; 86) étant en liaison d'entraînement en rotation avec le moteur électrique (87).

5. Convoyeur selon la revendication 4,
**caractérisé en ce que** deux arbres intermédiaires adjacents (84 ; 85 ; 86) sont en liaison d'entraînement en rotation par le biais d'un troisième moyen de traction (82).

6. Convoyeur selon la revendication 4 ou 5,
**caractérisé en ce que** le moteur électrique (87) est fixé au cadre de levage, le moteur électrique (87) étant réalisé sous la forme d'un motoréducteur dont l'arbre d'entraînement est connecté fixement à un arbre intermédiaire (84).

7. Convoyeur selon l'une quelconque des revendications précédentes,
**caractérisé en ce que** les entraînements de levage (46) comprennent des vérins pneumatiques.

8. Convoyeur selon la revendication 1 ou 7,
**caractérisé en ce que** les entraînements de levage (46) sont connectés par le biais de supports de levage séparés longitudinaux (42) afin de former le cadre de levage (41), les supports de levage (42) présentant une forme en section transversale constante avec une portion de crémaillère (43), deux entraînements de levage adjacents (46) supportant à rotation un arbre de pignon (49) qui est pourvu au moins en partie d'une denture extérieure (52) de manière répartie sur toute sa longueur, laquelle denture extérieure s'engrène dans la portion de crémaillère (43).
